# EUROPEAN PATENT SPECIFICATION

(11) **EP 2 712 346 B1**
(45) Date of publication and mention of the grant of the patent: **08.11.2017**
(21) Application number: 12715455.7
(22) Date of filing: 15.03.2012
(51) Int. Cl.: B64B 1/02, B64C 29/00, B64C 39/02

(54) **AIRBORNE PLATFORM**
LUFTPLATTFORM
PLATE-FORME AÉRIENNE

(30) Priority: 15.03.2011 PT 2011105565
(43) Date of publication of application: 02.04.2014
(73) Proprietor: Omnidea, Lda., 3510-017 Viseu (PT)
(72) Inventor: COSTA DUARTE PARDAL, Tiago, 1600-867 Lisboa (PT); MARQUES DOS SANTOS SILVA, Pedro Miguel, 1500-240 Lisboa (PT)
(74) Representative: Pereira da Cruz, Joao
(86) International application number: PCT/PT2012/000007
(87) International publication number: WO 2012/125052

(56) References cited:
- WO-A1-2007/139412
- US-A- 4 073 516
- US-A- 4 366 936
- US-A1- 2008 296 905

## Description

### Field of the invention

The present invention relates to the field of Aeronautical Engineering and consists of an airborne platform that can be built to arbitrarily large sizes without requiring rigid structures of a dimension comparable to that of the platform, and uses a combination of buoyancy and aerodynamic lift via the Magnus effect in order to stay aloft. This platform can be used as an aircraft (aerial vehicle), or it can be tethered to fulfil roles that are suited to static platforms. Possible applications for this airborne platform include (but are not limited to) cargo and passenger transport, forest fire fighting, advertising, aerial photography, video recording and surveillance, telecommunications and wind energy harnessing.

### Background of the invention

### Cited documents:

- Patent WO2004/012992A2, R. Mondale, 12/Feb/2004;
- Patent US4366936A, F. D. Ferguson, 4/Jan/1983;
- Patent WO2007/139412A1, T. Pardal, 6/Dec/2007.

Airborne platforms can either be aerial vehicles or stationary devices. Usually only platforms that use buoyancy for lift (aerostats) can be used in a stationary role. Although non-rigid aerostats (blimps) can be built to arbitrarily large sizes without rigid structures of comparable dimension, their sole reliance on buoyancy for lift makes very large payloads unfeasible due to the huge volume of buoyant gas necessary and the limits of wind speeds to which it can be subjected before crashing by the dynamic behaviour induced by drag. The most effective buoyant gases that can be used are helium, which is very expensive and hydrogen, which is highly flammable. Therefore, handling a very large amount of either is always costly.

Regarding aerial cargo transport, it has been mostly limited to one of three aircraft types: fixed-wing freight aircraft, cargo helicopters and airships.

Fixed wing freight aircraft often have dimensional limitations (limited cargo space inside the fuselage) that prohibit the transport of payloads with very large dimensions or dimensional proportions too distinct from those of the aircraft's fuselage. The carrying of cargo (especially arbitrarily shaped cargo that may not be aerodynamically streamlined) inside the fuselage in fixed wing aircraft is a necessity to ensure good flight performance and safety. Additionally, pure fixed wing aircraft cannot achieve vertical take-off and landing, or operate in confined spaces

Cargo helicopters, on the other hand, can operate in confined spaces and achieve vertical take-off, as well as carry externally under-slung cargo that may be larger than the fuselage. However, cargo helicopters retain the range limitations typical of rotorcraft and cannot be practically scaled up to very large dimensions.

Finally, airships rely mostly (or solely) on the use of a buoyant gas to provide lift. Although they can carry bulky payloads externally, scaling them up raises the aforementioned problems related to envelope size. Moreover, since airships are defined as aerostats with rigid envelopes, they require a rigid support structure that must be as large as the envelope.

There are some published transport system descriptions that use the Magnus effect in their operation. These are described in documents WO2004/012992A2 and US4366936A.

The first system (WO2004/012992A2) claims the invention of an aircraft whose lift is ensured by inflated bags of buoyant gas that are placed between two large horizontal plates, with an endless curtain moving around the periphery between said plates and generating, due to the Magnus effect, a horizontal force that helps to steer the aircraft. A crucial difference to the present invention is the use of the force from the Magnus effect to augment the lift capability of the aircraft, instead of employing it for steering purposes, like the aforementioned system does. Therefore, the system described in WO2004/012992A2 can be classed as a platform that relies only in buoyancy for lift.

The second system mentioned (US4366936A) comprises a spherical envelope of buoyant gas, spinning about a horizontal axis and generating lift via the Magnus effect. A piloting/transport gondola is added in the bottom of the craft, detached from the spinning envelope. This system is not modular (it always comprises a single envelope). This means that there are no means through which control forces applied at different points of the aircraft can be generated using the same mechanism that generates the aerodynamic lifting force. Moreover, there must be a rigid structure connecting two opposite poles of the spinning spherical envelope, which means that there is need for a rigid structure of a size comparable to that of the aircraft.

Another related invention in that it uses inflated spinning cylinders is listed in document WO2007/139412 A1, and consists on a system comprising a tethered airborne module that can be a spinning cylinder filled with buoyant gas and a winch on the ground that is coupled to a motor/generator. The cylinder is spun, immersed in an oncoming wind stream and the lift generated by the Magnus effect raises it, pulling the tether and generating energy at the winch. Once a maximum defined altitude is reached, the cylinder rotation is stopped and part of the energy generated is used to reel in the tether at the winch, preparing it for a new power generation cycle. This system, although outwardly similar to the present invention, cannot be used as an aerial vehicle and is oriented solely to wind energy harnessing and does not include any details on how to provide a subsystem for spinning the cylinders or how to have a structural system based on inflatable components and cables so that no massive rigid structure has to be airborne.

### Disclosure of the invention

The present invention addresses the need for modular airborne platforms (tethered or free-flying) that are of substantially large dimensions and that can be easily scaled up to even larger dimensions by adding more elements similar to those already present.

The present invention consists of an airborne platform with the features of claim 1. Said airborne platform has a modular structure, including one or several lifting bodies which are connected by slender structural elements and individually generate lift via a combination of the (aerodynamic) Magnus effect and buoyancy. The structural elements connecting the lifting bodies are cables that transfer only axial traction loads. There are means to create a motion of the surface of the lifting bodies which is necessary for an aerodynamic force to be generated via the Magnus effect, providing a lift force.

There are one or more envelopes with gas in the platform, which provide buoyancy force that is not dependent upon substantial motion of air relatively to the platform.

The scalability of the platform from smaller sizes to larger sizes (with greater lift capability) is done substantially by adding extra lifting bodies or sets of lifting bodies to a base structure that can be common to smaller or larger embodiments of the platform.

### Description of the drawings

The drawings that follow, illustrating the embodiments of the invention to be further described in greater detail, are briefly described.

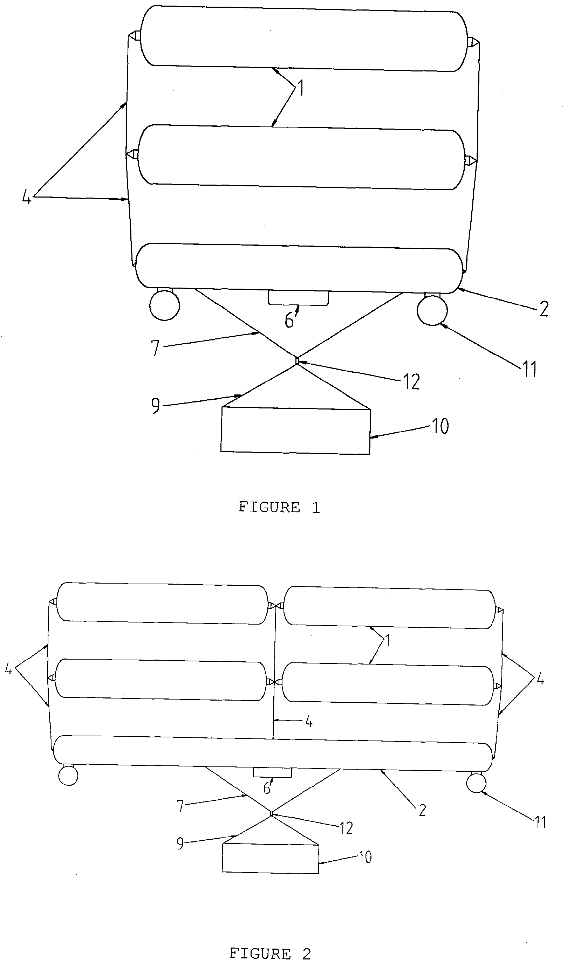

Figure 1 shows a front view of a simpler embodiment of the invention which uses only two lifting bodies and is configured as an aerial vehicle. The embodiment depicted in Figure 1 is a simpler implementation of the invention, although it displays its main features. Depicted is a front view of the airborne platform configured as an aircraft. It consists of two lifting bodies (1), which are connected by cables (4) in one column, with an anchoring module (2) at the bottom. To this anchoring module (2) are also connected a gondola (6) (which can house a crew, the control system or various other subsystems), a conventional propulsion system (11) attached by articulated mounts, and convergence cables (7). These convergence cables (7) connect the anchoring module (2) to a convergence point where a swivel (12) exists. This swivel (12) is in turn connected to a cargo payload (10) by payload cables (9). In this embodiment, the lifting bodies are spun by a torque applied to their axis at one end. Also in this embodiment, the cargo capacity of the aircraft may be increased by increasing the number of lifting bodies in the column, without substantial changes to the rest of the platform apart from replacing existing cables or adding extra cables to withstand the higher loads, and adding energy storage or generation devices to power the spinning motion of the extra lifting bodies.
Figure 2 shows a front view of a larger embodiment which uses four lifting bodies arranged as a two-by-two matrix and is configured as an aerial vehicle. The main difference to the similar embodiment of figure 1 is that the lifting bodies (1) are arranged on a two-by-two matrix over a stretched anchoring module (2). The lifting bodies (1) are connected to each other and to the anchoring module (2) by cables (4). The anchoring module (2) also has attached a gondola (6), a propulsion system (11), and convergence cables (7) that converge to a point where a swivel (12) exists and from which payload cables (9) radiate to attach a payload (10). In this configuration it is possible to control the roll of the platform (as in an aircraft flight control) by having each column spinning at different speeds.

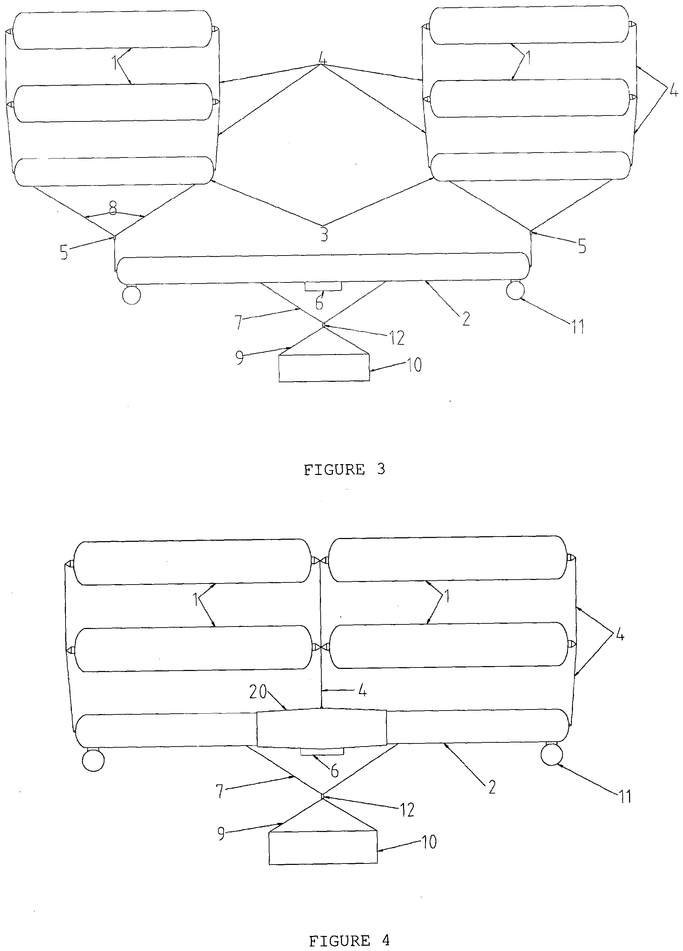

Figure 3 shows a front view of a larger embodiment of the invention which, in this case, uses two separate sets of lifting bodies (1) arranged in columns and is configured as an aerial vehicle. Each column has its own secondary anchoring module (3), and each anchoring module has a secondary set of convergence cables (8) that converge to a column swivel (5), which is connected also by cables to the primary anchoring module (2). As in the previously described embodiments, the anchoring module (2) also has attached a gondola (6), a propulsion system (11), and convergence cables (7) that converge to a point where a swivel (12) exists and from which payload cables (9) radiate to attach a payload (10). This embodiment has the advantage of having two separate columns of lifting bodies at opposite ends of the aircraft. The propulsion system (11) may be used in a manner that causes the aircraft to spin about a vertical axis, thus creating airflow over the columns of lifting bodies without need for a substantial translation movement of the aircraft. This allows the aircraft, not only to take off and land vertically in a ground area of comparable size to that of the aircraft itself, but also to change from vertical to horizontal flight by incrementally increasing the radius of the flight path.
Figure 4 shows a front view of a similar embodiment to that which is depicted in Figure 2, but with one of the components, the anchoring module, built in a different manner. The lifting bodies (1) are arranged on a two-by-two matrix over a stretched anchoring module (2). The main difference is that the anchoring module (2) is built from two modules that are structurally joined together by a joining sleeve (20). In this embodiment, the platform is configured as an aerial vehicle.

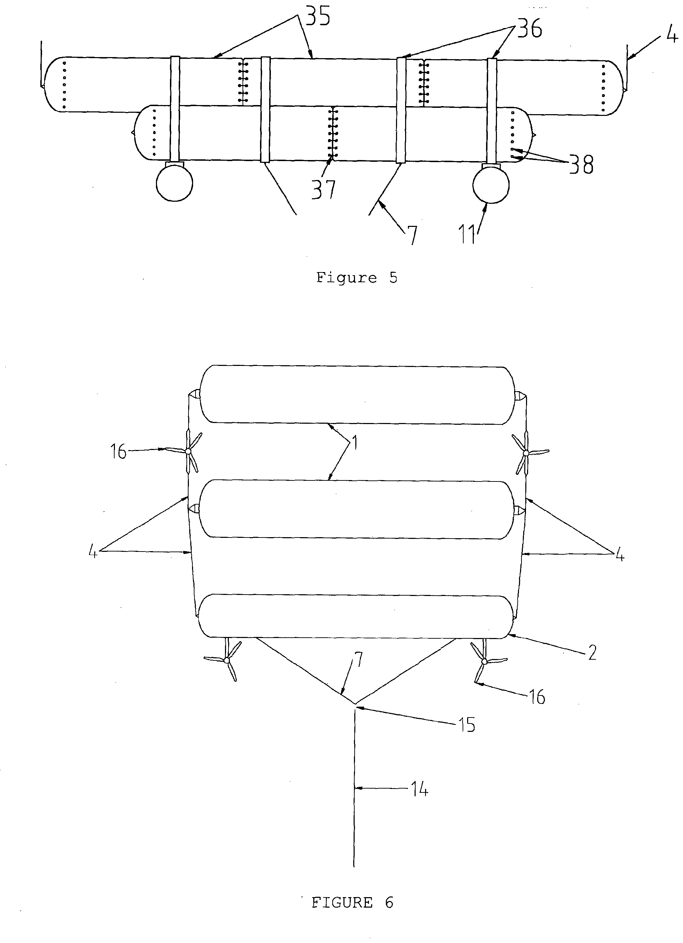

Figure 5 shows a primary anchoring module (2) assembled in a modular fashion, by joining several smaller inflated bodies (35) (in this case shaped as cylinders). Said smaller building blocks (35) are joined together end-to-end by straps (37) attached to eyelets (38) in flaps of the envelope in order to make longer cylinders. These longer cylinders are themselves bundled together and held by flexible or rigid joining bands (36) to configure a long primary anchoring module. The figure also depicts primary convergence cables (7), column cables (4), and a propulsion system (11).
Figure 6 shows a front view of a simpler embodiment of the invention which uses only two lifting bodies (similarly to figure 1), includes airborne the existence of open turbo-machines (16) mounted on the platform that are shown mounted on supports attached to the lifting body cables (4) and to the anchoring module (2) (although other embodiments may have these devices mounted elsewhere on the platform). It is configured as a tethered airborne platform, instead of an aerial vehicle. The swivel (15) is connected to a ground station (18) by a tether cable (14). The turbo-machines (16) will act preferentially as wind turbines, but can also be configured so they can be used as either wind turbines or propellers of the propulsion subsystem (with better performance if given adequate actuation on the blades). The propulsion subsystem may be of any suitable type and the one considered in this embodiment is not a limitative example, meaning that it is not mandatory that the same components are used for both propulsion or as wind turbines or even that both turbines and propulsion should exist simultaneously in the same platform.

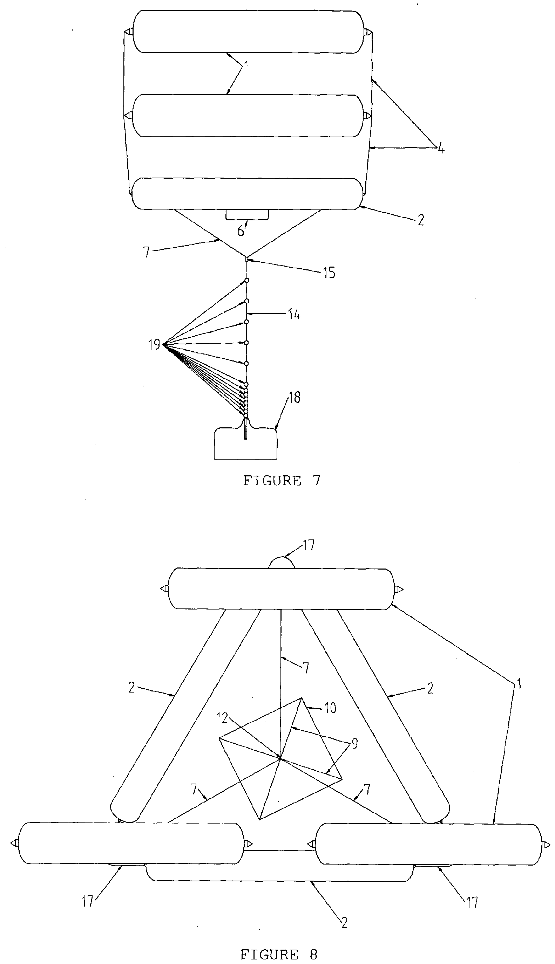

Figure 7 shows a front view of a simpler embodiment of the invention which uses only two lifting bodies and is configured as a tethered platform. The tether cable, the ground station, and means of signalling the tether cable are explicitly depicted. The tether cable (14) may have signalling pods (19) attached to it. The drawing depicts some of these signalling pods (19) in a queue at the entry of the cable (14) to the ground station (18), while others are distributed along the tether cable (14).

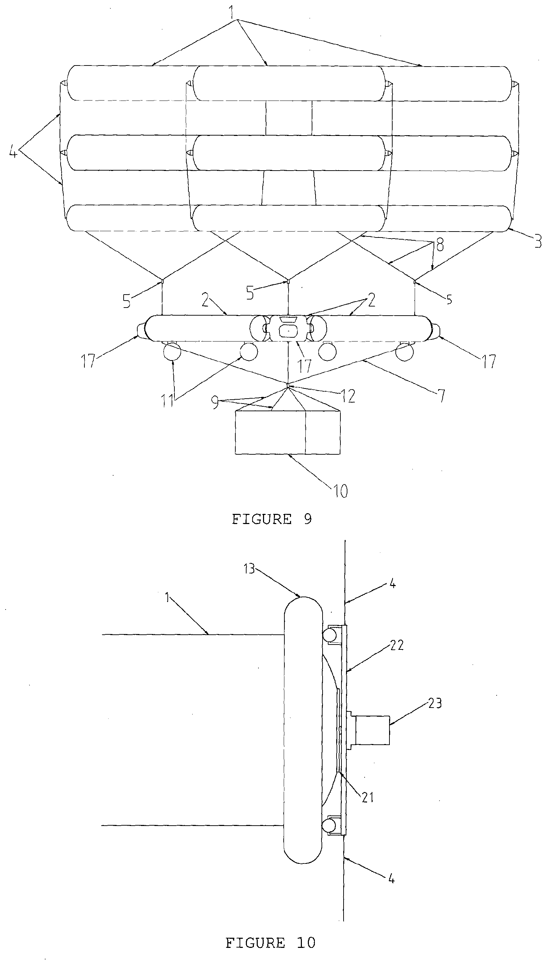

Figure 8 (top view) and figure 9 (front view) show a different embodiment of the platform, again configured as an aerial vehicle, in which the primary anchoring module (2), rather than being comprised of one long and slender element, is comprised of three such elements arranged as sides of a triangle. The three elements, of the primary anchoring module (2), are connected structurally by vertex modules (17) at the vertices of the triangle (partially hidden in the drawing). Such modules also serve as attachment points for columns of lifting bodies (1) (similarly to the ones described previously that include secondary anchoring modules), secondary convergence cables (8) and a column swivel (5), as well as column cables (4) to connect the lifting bodies (1) to each other and to the secondary anchoring modules (3). The payload (10) is suspended by payload cables (9) that radiate from a payload swivel (12), to which converge the primary convergence cables (7) from the vertex modules (17). The vertex modules (17) can also perform the same functions that a gondola has in other embodiments, in which case they ought to be rigid. A propulsion system (11) is also depicted (two of the propulsion modules are shown behind primary convergence cables (7)).
Figure 10 shows a detail of part of one lifting body in one embodiment in which the lifting body spins as a whole and is actuated at the ends.

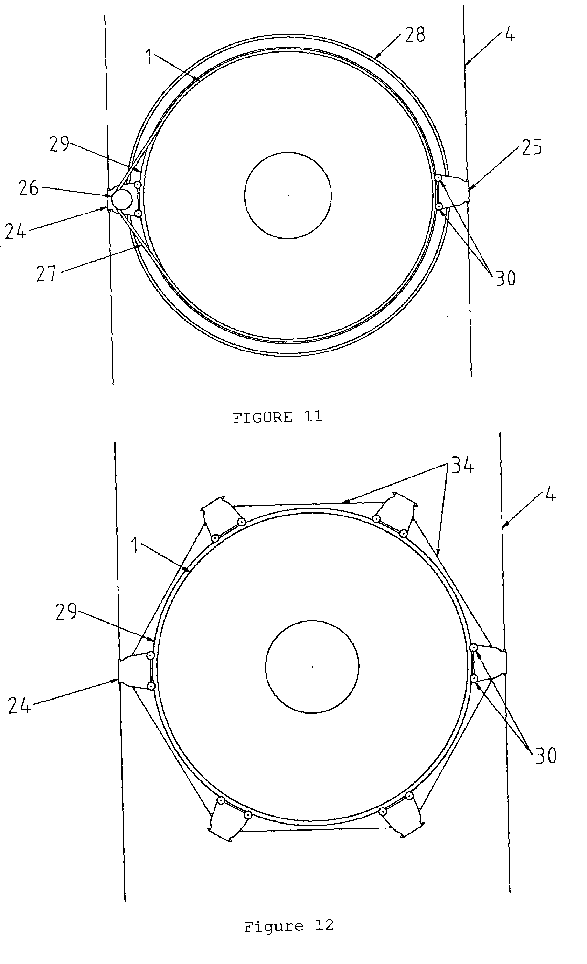

Figure 11 shows a detail of part of one lifting body in one embodiment in which the lifting bodies spin as a whole and are actuated at an arbitrary span location via a belt transmission.
Figure 12 shows a detail of part of one lifting body in one embodiment in which the lifting bodies spin as a whole and are actuated at an arbitrary span location via a set of driving pods connected to each other by cables.

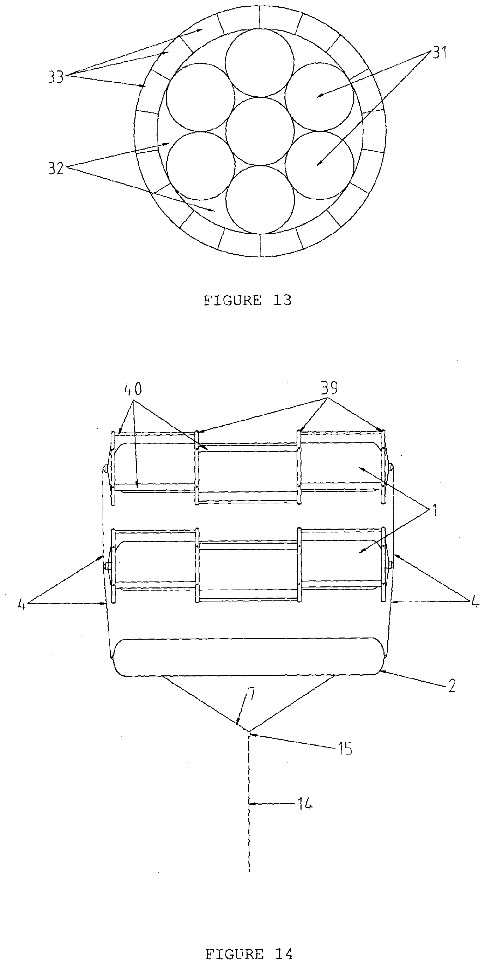

Figure 13 shows a cross-section of one inflated envelope that is built with separate compartments in a triple-layer scheme to safely use a combustible buoyant gas (like for example hydrogen) in the inner most layer, a gas inert to combustion in the middle layer (which has higher diffusion to the buoyant gas than the inner layer) and one optional external layer.
Figure 14 shows blades of vertical axis wind turbine (40) of Darrieus type co-axially mounted with the lifting body, divided in three sections by the structural component (39).

### Detailed Description of the invention

Of the aforementioned components that are part of the invention systems, the most important are:
- the lifting bodies (1) of the aerodynamic system;
- the anchoring modules (or anchoring bodies) (2, 3) of the structural system (that hold compressive loads (it should be noted that anchoring modules can also be lifting bodies);
- the various sets of cables (4, 7, 8, 9, 14) that connect the various platform components and are mainly under traction stress, such that they only transfer traction loads, also belonging to the structural system;
- the components that are part of the interface system, which include the components for transmitting torque and rotation to the lifting bodies (1), which include parts from both the control, and the structural system.

Although not limitative, in preferred embodiments, both the lifting bodies (1) and the anchoring modules (2,3) are slender cylinders, total or partially inflated with buoyant gas. At least the upper most lifting bodies (1) (the ones on top of each column) should have net positive buoyancy, meaning that they ought to have the so called property of aerostats of being lighter-than-air. Generally, the lifting bodies may spin as a whole, or may be substantially fixed, with only their outer surface spinning. In preferred embodiments, the interfaces system makes the lifting bodies to spin as a whole by:
- a torque transmitted to them either at their ends (i.e.: the tops or extremities of the cylinders) at their axes of symmetry;
- a torque transmitted to them by either a transmission belt subsystem or by powered pods that roll over the surface of the lifting body and that are connected between each other on a ring that cannot rotate and thus force the lifting body to spin. These possible ways of transmitting work can be based solely on friction or have a gear-like teeth design.

The first method is depicted in detail in Figure 9, and is implicitly used in the embodiments depicted in Figures 1 through 8, while the other two methods are depicted in greater detail in Figures 10 and 11. Both methods are explained in greater detail further ahead in the text.

The aerodynamic lift force is generated via the Magnus effect when the spinning surface of a lifting body (1) is immersed in a relative airflow substantially perpendicular to the spinning axis of the lifting body. Such airflow may be caused by a combination of movement of the platform through air and/or wind impinging upon the platform.

### Structural system - cables and inflated components

According to the invention, the slender structural elements connecting the various components of the platform are cables, meaning that they only transfer traction loads and no bending or compression loads.

The anchoring modules have a mainly structural function, interfacing different components of the platform, like the propulsion and control systems, and anchoring them to one or more columns of lifting bodies above them and to the payloads below them. In preferred embodiments, they are inflated envelopes (with buoyant gas) which may be further reinforced with rigid elements (which, in turn can also be slender elements inflated at a higher internal pressure) to add adequate structural stiffness.

Structural components (39) may be cable spokes under stress (by centrifugal force) once the set, lifting body plus blades, is in rotation, or an inflated torus, or even just a flexible disc that would perform has the cable spokes. Thus, a set comprised of a lifting body plus a vertical axis turbine spins with the same angular velocity.

The structural system has therefore cable elements that transmit traction and, rigid elements that in many cases can be inflated and thus have the rigidity given by internal pressure.

### Anchoring modules

In one platform, more than one anchoring module may exist. There may be a primary anchoring module for the aircraft and one secondary anchoring module for each column of lifting bodies, or a set of horizontally placed primary anchoring modules with columns attached to them at their ends or at intermediate span locations. In the embodiments of the invention in which there is only one column of lifting bodies (as depicted in Figure 1), the secondary anchoring module is the same as the primary anchoring module.

Having secondary anchoring modules connected by convergence cables to a primary one allows the platform to both:
- fly with the primary anchoring module not parallel to secondary ones and also;
- have the columns of lifting bodies stacked at different reference heights above it so that they will each face the incoming fluid less disturbed by any other column of lifting bodies that may be in front of their path;
- have the columns of lifting bodies not aligned (as for example in figures 8 and 9).

The control system can control the length of the cable between the swivel (5) and the anchoring module.

The anchoring module allows the transmission of loads between the columns of lifting bodies to the payload and helps stabilizing said lifting bodies structurally, thus preventing their buckling or excessive flexure due to compressive forces applied on them. It is also important (although not mandatory) to have an element that is not spinning and to which other components of the platform may be attached.

### Modularity

To preserve modularity and in the embodiments in which the primary anchoring module has a larger span than each of the secondary anchoring modules, said primary anchoring module may be built by joining together in a structural manner bodies identical to those which are used for the secondary anchoring modules, or other similar bodies designed especially to serve as building blocks for primary anchoring modules of different sizes. Anchoring modules built in this manner may have additional structural elements (as for example straps and sleeves) to join them together as well as transmitting and resisting loads.

### Airborne tethered platforms

In every embodiment in which it is present, the tether cable (14) may need to be illuminated or otherwise signalled. In order to accomplish this, optical fibres can be embedded in the cable, whose purpose would be to illuminate it by lateral refraction (these are also called Bragg fibres). Alternatively, a system comprised of discrete signalling pods (19) arranged at defined intervals along the cable (14) may be used. Said signalling pods would be, for example, hollow spheres or otherwise axisymmetric hollow bodies and would have two opposite orifices through which the cable would be passed in a manner similar to a bead on a string. These signalling pods would be able to slide freely along the cable, but could also be locked at a fixed position on the cable by a coupling device, causing them to move with the cable. Said coupling device would be actuated by the control system. This ability to lock or slide the signalling pods would be used whenever the cable needed to be wound in a winch located either in the platform or on the ground. For the case in which the platform is tethered to a system intended to produce electricity, which includes a ground-based winch, the tether cable with signalling pods may be safely used. In such operation, when the cable is fully extended the signalling pods are distributed along it at predefined intervals and are locked into position. When the winch is reeling in the tether cable, each signalling pod is unlocked as it approaches the winch and allowed to stay in the same position relative to the ground, with its movement constrained only by the tether cable itself and a stopper that prevents it from going into the winch's drum (or by previous signalling pods in a queue, the first of which contacts the stopper). When the cable is unwound, the signalling pods in the queue are locked to the cable, one by one, as each desired cable position slides by the queue. The signalling pods themselves would also comprise a means to store electrical energy, such as a rechargeable battery, capacitors or others, and a means to generate electrical energy, either by drawing it from the cable via an electric induction device (whenever there is alternating current in the tether cable to which the pod is coupled to), or by using internal rollers which would be activated by movement of the signalling pod relative to the cable and would be coupled to a small alternator or other electricity-generating device. In order to perform their main function, the signalling pods would also include suitable signalling lights (light emitting devices) or other signalling devices.

The tether cable may have in a defined length descending from the platform or its swivel an additional electric conductive cable, either included in the tether cable or external to it (for example next to it or twisted around it for instance in a winding), that as the purpose of discharging lightning strikes to the ground. The way this task is performed is by reeling in the cable lowering the platforms altitude up to the point where this electric conductive cable becomes plugged into a connection in the ground station that electrically grounds the airborne platform.

In a further improved embodiment of the invention, multiple tether cables (14) may be used, connected to multiple ground stations (18) in order to split the tethering loads among said ground stations. The control systems of said ground stations would need to be coordinated with each other in order to ensure an acceptable loading distribution among the ground stations.

The tether cable (14), the convergence cables (7) and the swivel (15), apart from structurally withstanding the tensile stress to which they will be subjected, they may be able to conduct through them a combination of fluids, electricity and optical signals. They can be used, for example, to resupply the platform of buoyant gas, fuel or electrical power, and also to carry wired communications between the platform and the ground. For this purpose the cables may have to include components like fluid transfer tubing, structural fibres, electric conductors, and/or optical fibres.

Furthermore, not all the tether cables have to be similar, some could be just structural while others not holding much load, some could carry through them solely information or fluids, or even have electric conductors for electricity transfer, but wherein they only have one phase, or the ground or the neutral (or the positive or the negative in DC case) and the electric circuit is closed through other cable(s).

### Interfaces Subsystem - Spinning Actuation

Regarding drive systems for the lifting bodies, Figure 10 depicts a detail of the mechanism required to spin the lifting bodies when a device is used that applies torque directly to the axis. At one end of a lifting body (1) (partially depicted) there is a rigid, structural hub (21), which is part of the lifting body (1). The hub (21) is connected by a shaft to an actuator device (23) fixed to a support structure (22), which includes attachments to cables (4) that are themselves connected in a manner (as a non-limitative example to another cable, or to a support structure (22)) that end up by transmitting its load to an anchoring module and convergence cables (not depicted). The actuator device (23) applies torque (via the shaft) to the lifting body hub (21) and this torque spins the lifting body (1). Depicted is also an auxiliary wheel (13), which may be a structural component, for example, when contacting the support structure (22) via rollers that transmit loads, this wheel (13) may be at a much higher pressure than the lifting body (1), be fixed to the peripheral surface of the cylindrical shape and thus can grab the lifting body (1) in the highest diameter surface (which tend to be the part at highest material surface tension and therefore more rigid), this way any bending moment (in the hub (21) caused by the aerodynamic forces and the forces in structure (22)) will have a lesser impact in the aligning between the spinning axis of the lifting body (1) and the axis of the actuator (23), therefore improving the power required for spinning the first.

Aside from this structural role, another function of this auxiliary wheel (13) is to mitigate tip vortices at the ends of the lifting body (1) and therefore reducing aerodynamic induced drag. A wheel (13) can also be a structural component (39) and thus, not only have fixed into it blades of vertical axis wind turbine (s), but also several wheels (13) may be present along the span of a lifting body.

In the system illustrated in Figure 10, the components (4), (22) and (23) are fixed, while the elements (1), (13) and (21) can spin. Component (23) may be either an electric motor or an electric generator and in some cases have both functions.

The other preferential method to spin the lifting bodies, a rim and driving pod with a belt transmission, is depicted in Figure 11. The lifting body (1) has one or more inner rims (29) distributed along its span (only one is depicted in the drawing). Said inner rims (29) spin with the lifting body (1). Two pods, a driving pod (24) and an idle pod (25) are in contact with the inner rim via rollers (30), and are kept in diametrically opposed positions by a structure comprised of two halves which, when taken together form an outer ring(28). The driving pod (24) contains a driving pulley (26) which drives a belt (27). Said belt (27) is in contact with the inner rim (29) or the surface of the lifting body (1) and transmits torque from the driving pulley (26) to the lifting body (1), with a reduction in speed that is a direct consequence of the difference in diameters between the lifting body (1) and the driving pulley (26). The driving pulley (26) is actuated by a motor/actuator (not depicted). The driving pod (24) and the idle pod (25) are also anchoring points for cables (4), which connect the lifting body (1) to other lifting bodies or anchoring modules (not depicted).

It is also possible, in some embodiments, that the lifting bodies (1) are spun in a manner similar to the one depicted in Figure 11, but in which instead of a belt (27) and pulley (26) system, there are protuberances substantially similar to gear teeth in the surface of the lifting body and along a limited span, which mesh with a gear wheel in a driving pod (24). The gear wheel is connected to an actuator, which uses it to transmit torque to the lifting body and causes it to spin.

In yet another embodiment, depicted in Figure 12, the actuation is performed by a set of driving pods (24) which contact an inner rim (29) via rollers (30). The driving pods (24) are distributed along the periphery of each lifting body (1) and are kept at regular distances from each other by cables (34) or other structural elements. The actuation in this embodiment is performed by the rollers (30), which are connected to a drive system included in one or more of the driving pods (24) (the drive system is not depicted). A combination of rollers (30) is actuated and when rolling transmit torque to the lifting body (1), which causes the lifting body to spin.

In an alternative embodiment not depicted there could be merge between the embodiments of figures 12 and 10 in which case there would in a lifting body (1) two wheels (13), each with sets of rollers (at least three) on the peripheral surface of the wheel (13) and also on the side (similarly to the ones shown in figure 10), all the rollers in each wheel (13) are rigidly connected and this set of rollers in a wheel are connected by cables to the other set of rigidly connected rollers on the wheel (13) (that are a mirror to previously described) in order to keep its position in the system.

Another auxiliary device that can be used in some embodiments which use an air layer in the envelope is a set of nozzles mounted tangentially on the outside of the envelope. The purpose of these nozzles would be to eject the extra mass of air that must be expelled from the envelope to keep its overpressure constant as the platform gains altitude. The tangential mounting of the nozzles allows a small extra torque to be produced by reaction, which helps to spin the envelope.

### Non-cylindrical lifting bodies

It is not strictly necessary that the lifting bodies spin as a whole, but in some embodiments of the invention, it is sufficient that only their surface spins.

For example, the platform may include fixed cylinders with a moving cylindrical surface similar to a conveyor belt. When the option of having only the lifting body surface spinning is used, said body may have a prismatic form with any cross-section shape, not necessarily a circular one.

### Envelope

In the embodiments of the invention in which the lifting bodies are simply gas inflated envelopes, these envelopes ought to have a low diffusion rate of said gas through the envelope material, effectively being gas-tight. The inflated envelope wall may be constituted by a single layer material or by several dissimilar layered materials that fulfil different roles in the overall function of the membrane. For example, one material layer can have the purpose of resisting membrane loads and another material layer can have the purpose of ensuring a low gas diffusion rate. Additionally, the interior space of the lifting bodies may be partitioned in different compartments or interior envelopes such as to accommodate different gases. For example, if a buoyant gas is used that is combustible, this gas may be used to inflate the innermost compartments, while the outermost compartments are inflated with another gas that is inert to the atmospheric combustion reaction. In order to prevent a build-up of combustible gas in the outermost compartments, the materials or material combinations may be chosen in such a way that the diffusion rate of said combustible gas is greater through the material limiting the outermost compartments than through the material limiting the innermost compartments, thus causing a dispersion of combustible gas from the outer compartments to the atmosphere at a greater rate than that which said gas can leak from said inner compartments to said outer compartments.

In a similar alternative embodiment, instead of compartmentalizing the inflated bodies, an innermost inflated envelope is used, with an outermost truss structure whose elements are inflated. Elements of said truss can be obtained, for example, by sealing or otherwise longitudinally joining in a gastight manner one or more long pieces of gastight film or other type of suitable material or combination of materials, forming channels that can be pressurized with gas. These channels are the inflatable structure elements. The truss structure may be inflated with an inert gas and all the remaining surface of the inflated body also needs to be with an envelope. In case the intention is to use a combustible buoyant gas, then, the envelope outer membrane is also filled with inert gas, while in its interior there is at least one additional inner membrane (or innermost envelope) that is filled with the said combustible buoyant gas.

Alternatively, a multi-layer envelope structure may also be used, where surrounding the inert gas is a layer of air contained at higher than atmospheric pressure. The inflation state of this layer may also be used to control the internal pressure of the envelope and thus controlling the rigidity and surface tension state of the external layer. This external layer, since it has to withstand the difference in pressure between the multi-layer envelope and the surrounding atmosphere (one has to note that the inner layers are under hydrostatic pressure and thus under negligible surface tension state), it may have to be made of a composite or a multi-layer material since it has, at least to both be gas tight and have a high tensile strength with little elasticity (if one intends to keep shape dimensions). As an example, figure 13 depicts a cross section of a lifting body in an embodiment of the invention in which a triple layer system is used. There is an inner compartment (31) inflated with combustible buoyant gas, an intermediate envelope (or compartment) (32) inflated with a gas inert to combustion that should have a higher diffusion rate than the inner compartment (31) to its filling gas, and an outer envelope layer (33) filled with air (or also an inert gas), which could be pumped in or released in order to control the pressure difference in the overall inflated component.

In preferred embodiments of the invention, the arrangement of buoyant elements must both keep the weight of the uppermost elements from collapsing the system's general (vertical) arrangement and maintain the platform airborne (when not carrying a payload) without resorting to aerodynamic lift. Aside from the lifting bodies and anchoring modules, there may be discrete envelopes of buoyant gas distributed throughout the aircraft. In preferred embodiments, most of the buoyancy system is contained within the lifting bodies and anchoring modules, but other buoyant envelopes may exist throughout the platform in order to aid its stability, control and efficient operation.

### Relative pressure regulation

By relative pressure it is understood the pressure difference between inside the inflated body and the surrounding atmosphere. The relative pressure should always remain in an allowed range by the control system, or more precisely by volume regulation subsystem, part of the control system, which may be used in the inflated bodies, to compensate atmospheric pressure variations in regard to envelope internal pressure, thus preventing the later from bursting.

Such subsystem could consist of a gas routing tubing subsystem spread throughout the system, one or more reservoirs where buoyant gas could be stored at high pressure and valve and pump components to move gas between the high pressure reservoir(s) and the inflated bodies or other lower pressure reservoirs throughout the platform and thus be able to re-use and not waste buoyant gas. The gas routing subsystem may also be used to control the centre of buoyancy of the platform by moving buoyant gas reservoirs.

In another possible embodiment, the inflated bodies, being cylindrical, would be allowed, for example, to vary their length (span), increasing it as the gas inside said inflated bodies expands, and correspondingly increasing their volume in order to maintain a designated internal pressure. The aforementioned system for varying the span of the inflated bodies could consist of elastic elements performing in a way that the balance of forces is achieved at a predefined operating relative pressure range of the inflated body.

The relative pressure could also be controlled by having sets of separate envelope compartments in the inflated bodies that would have their volume defined by releasing or pumping the amount of gas to inside said inflated body compartment in order to maintain the relative pressure in the specified range.

In case the gas to be used is atmospheric air and combustible buoyant gas is also used in the same inflated body, a triple layer system as described previously could be used to control the buoyancy. In this case the amount of buoyant gas in the inflated bodies is kept constant (except for leakage) and a variable amount of air is added or taken from the third layer for relative pressure control.

### Power

Power to feed the platform's subsystems and to spin the lifting bodies may be obtained from either, the tether cable(s) (when the platform is tethered), open turbo machinery or wind turbines, both vertical and horizontal axis installed in the airborne platform, or an auxiliary power unit. When an auxiliary power unit is used, it may be similar to those used in current aircraft or it may be a different type of system like, for example, a fuel cell. Also, by vertical axis wind turbines it is understood any turbine which has its axis of rotation mainly perpendicular (i.e: vertical) to the air flow that it is facing (meaning that the angle is not related with the ground).

When the platform is tethered and the actuators for spinning the lifting bodies are electric motors, then in this case, there could be an embodiment wherein the said motors could be high voltage electric motors and the control system of the motors would be on the ground (such as for example the drivers) which would feed at high voltage through the tethering cable(s) directly the motors.

Optionally, Darrieus type vertical axis turbine(s) can be used not only to spin the lifting bodies when installed co-axially and peripheral with the later and fixed to the interfaces system, but also be used to spin a hub (21) and thus a generator in structure (22), therefore producing electric power to be conducted by the tether cable (s) to the ground station(s), preferably by converting the current to DC with a bridge rectifier, connecting each bridge in series and thus increasing the voltage and conduction efficiency through the electric conductors in the tether cable(s).

### Swivels

In the embodiments that use swivels, the swivels must be able to allow free rotation between the cable sections or sets that they interface to, transmit traction loadings between said cable sections or sets of cables and, when multifunctional tether cables are used, the swivels must also transmit all that the cables transmit, including a combination of loads, fluids, electricity or optical communication signals.

The transmission of fluids may be made in a non-continuous manner in order to reduce gas leakage through otherwise necessary rotating seals.

The gases to be used, especially buoyant gases have a high diffusion rate through most materials, which makes their sealing difficult, especially if the seals need to slide or rotate without friction. To address this issue, the swivel may include actuation valves in the gas lines upstream and downstream of the swivel and these valves may regulate the transmission of gas in such way that the gas passes through the swivel in short discrete bursts, thus minimizing leakage through the rotating seals, furthermore the swivel may incorporate a mechanism to lock its rotation temporarily during the instances when the gas is being transmitted. In the latter case, gas would also be passed in short bursts, this time when the swivel is locked from rotating. The same reasoning is also applicable for transfer of liquid fluids.

For transmitting information carried by optical fibre through the swivel, there coupling could be done radially, by having ideally at least three (but it could be has little has one) device emitting the optical fibre light signal from one side of the swivel, into a ring (ensuring that with rotation no signal is lost) of several photo-detectors (receptors) on the other side of the swivel (although the receptors could be just one if the emitters are least three).

Another feature of the swivels would be a separate electricity transmission system to conduct electrical discharges from the atmosphere (i.e. lightning) to the ground. This subsystem may be activated only when the detected electrostatic fields in the vicinity of the platform exceed a certain threshold. In this case, the platform if tethered to the ground, should be lowered to a height where the amount on unreeled cable includes an electric cable with enough thickness to discharge a lightning though it. In this case the swivel should lock and a component such as a spark gap (or any other lightening discharge plug component) in the swivel be plugged (by the control system) between the lightening discharge conductors of both the airborne platform and the tether cable.

### Calibration

A ballast control subsystem can be used in some embodiments of the invention to fine control (i.e.: trim) the position of the platform's centre of mass or to change the platform's different moments of inertia by moving a ballast fluid, for example water, between reservoirs located on the extremes and near the symmetry plane of the platform.

The centre of mass may be additionally controlled by moving the payload. This can be achieved by individually changing the length of the cables that attach it to the platform.

### Applications

As long as a particular embodiment is given the means and systems necessary, the platform can be operated by an on-board crew (for which it will need a cockpit and/or crew cabin) or remotely by a ground crew or via an autonomous automatic control system.

As a transport aircraft, the platform allows the carrying of cargo and/or passengers. Specifically, the cargo to be carried may be heavier or bulkier than that which can be carried by more conventional aircraft, and it can also be arbitrarily shaped. It is not expected that an aircraft based on this type of airborne platform will have a cruising speed comparable to modern turbofan or even turboprop aircraft, even if they have those types of devices as their propulsion systems. In terms of cargo transport, it will be an intermediate alternative between conventional freight aircraft and seagoing vessels, combining the flexibility of aircraft with the aforementioned capability to handle heavy and bulky cargo. As a passenger transport, it is expected that it's used mostly for leisure travel, as an aerial equivalent of an ocean liner. The aircraft may also be used as an advertisement platform, for aerial photography or video or for fighting forest fires and many other applications.

When tethered, the airborne platform may also be used as a sensor platform, a telecommunications relay, a command and control station for any operation that spans a large area, as a crane to lift payloads to high altitudes or to convert power from high altitude winds, in this later application there are many approaches as for example:
- The airborne platform may manoeuvre in a two phase cycle in which it gains altitude, pulls the tether cable(s) and this way transferring energy to the ground station(s).
- Wind turbines can be installed in the tether cable(s) and their power transferred to the ground station(s) either by electric conduction or by torque and rotation, if the turbines used are of vertical axis (Darrieus type), then the airborne platform is being used to provide stress to the tether cable(s) and avoid the blades from flattening.
- Wind turbines with generator may be installed in the airborne platform.

In this later embodiment, the airborne platform is most probably bound to be heavier-than-air, in which case:
- if tethered offshore, the top line of lifting bodies ought to be lighter-than-air, so that if the airborne platform fall by the absence of wind and is floating on water, the said top line of lifting bodies remains airborne and can more easily restart the system and start the take-off of the platform once wind with enough velocity returns;
- Otherwise the tethered airborne platform is bound to also include a propulsion system (even if just by having the use of the turbines reverted into propulsion by feeding them with electric power), so that in case the wind velocity is not enough to keep the platform airborne, the propulsion system can be used to have the platform manoeuvring for instance in circle in order to get the necessary relative wind speed to remain flying.

## Claims

1. Airborne platform having its total lift achieved via a combination of buoyancy in the atmosphere and the aerodynamic force caused by the Magnus effect, composed of:
a) an aerodynamic system comprising lifting bodies (1) configured as spinning bodies and arranged in a matrix, said lifting bodies (1) comprising inflated components;
b) a structural system; and
c) a control system that actuates on an interfaces system configured to spin the lifting bodies (1);
**characterized in that** the structural system comprises:
i) one or more anchoring modules (2) which do not spin and hold compressive loads, said one or more anchoring modules (2) comprising inflated components; and
ii) cables (4) that connect the lifting bodies (1) to each other and to the one or more anchoring modules (2), and transfer only axial traction loads in between the lifting bodies (1) up to the one or more anchoring modules (2).

2. Airborne platform according to claim 1 **characterized in that** the interfaces system spins the surface of a lifting body (1) by any of the following alternative embodiments:
a) spinning the lifting body (1) as a whole, substantially about its axis of symmetry, by applying a controlled torque, via an actuator (23), at the ends of said lifting body and substantially to said axis of symmetry, with a set of rollers rolling on a wheel (13);
b) spinning the lifting body (1) as a whole, substantially about its axis of symmetry, by applying a controlled torque, via an actuator and a belt (27) system, to the periphery of said lifting body (1), with this arrangement being implemented at any arbitrary location along the span of said lifting body (1);
c) spinning the lifting body (1) as a whole, substantially about its axis of symmetry, by applying a controlled torque, via an actuator and a synchronous drive system comprising gear-like teeth, to the periphery of said lifting body (1), with this arrangement being implemented at any arbitrary location along the span of said lifting body (1);
d) spinning the lifting body (1) as a whole, substantially about its axis of symmetry, by applying a controlled torque, via actuation of a driving system comprising two wheels (13), each with at least three sets of rollers around and on both the peripheral and outer side (closer to the cylinder shape top) surface of the wheel (13), all the rollers in each wheel (13) are rigidly connected by a structure (22) and the set of rollers in a wheel are connected by cables to the other mirroring set of structure (22)rigidly connected rollers on the other wheel (13) in the lifting body;
e) spinning the lifting body (1) as a whole, substantially about its axis of symmetry, by applying a controlled torque to a rim (29) via actuation to spin the rollers (30) in the driving pod (24) ;
f) having the surface of the lifting body (1) constituted by a set of mats that move in a manner similar to conveyor belts and, create conditions for the generation of lift via the Magnus effect, while the majority of the lifting body structure remains stationary.

3. Airborne platform according to claim 1 **characterized in that** there are sets of columns of lifting bodies (1) in which each column is above and connected to a primary anchoring module (2), and:
a) each column has a separate secondary anchoring module (3) and each secondary anchoring module (3) is connected by structural elements (8) to a primary anchoring module (2), by means of a flexible structural element, eventually causing each column to have a different reference height above the primary anchor module or
b) two or more columns are connected to a common primary anchor module.

4. Airborne platform according to claim 1 **characterized in that** an inflated body is divided internally into compartments, with the innermost compartment(s) (31) inflated with a combustible buoyant gas and the outermost compartment(s) (32) inflated with a gas that is inert to the combustion of said buoyant gas in atmospheric air, and in which the materials of said compartment(s) have a diffusion rate of the buoyant gas through it, greater than the diffusion rate of the buoyant gas through the material limiting said innermost compartments (31).

5. Airborne platform according to claim 1 **characterized by** a combination of:
a) two subsystems for controlling the position of, respectively, the centre of mass and the centre of buoyancy of the airborne platform by moving fluids, that can be either ballast fluids or buoyant gases between reservoirs;
b) a subsystem comprised of an extra outer compartment (33) in inflated envelopes, which have always the same relative pressure by gas pumping and release actuated by the control system.

6. Airborne platform according to claim 1 **characterized in that** it includes one or more tether cables to connect the platform to the same amount of ground stations, with each tether cable including a combination of:
a) Structural fibres;
b) Fluid transfer tubing;
c) Electric conductors;
i) Including in only part of the length descending from the platform, a lightning discharge conductor;
d) Optical fibres;
e) Signalling pods (19) with two diametrically opposed orifices which include rollers that contact the cable and controllable brakes that lock the pods to a fixed position in the cable, an energy storage subsystem, signalling lights, a subsystem for electric power generation composed of a combination of:
i) electric generators actuated by the rollers;
ii) electric induction devices.

7. Airborne platform according to claim 1 comprising, co-axially with a lifting body (1), one or more vertical axis wind turbines, with each blade (40) fixed at its ends to a structural component (39).

8. Airborne platform according to claim 7 **characterized in that** the one or more vertical axis wind turbines comprise one or more tether cables (14) and provide torque and rotation to a hub (21).

## Patentansprüche

1. Luftgestützte fliegende Plattform mit ihrem Gesamtlift erzielt über eine Kombination von Auftrieb in der Atmosphäre und der aerodynamischen Kraft, die durch den Magnus-Effekt verursacht wird, zusammengesetzt aus:
a) aerodynamischem System, in einer Matrix angeordnete rotierende Hubkörper (1), wobei die Hubkörper (1) aufgeblasene Bauteile aufweisen;
b) ein strukturelles System; und
c) ein Steuersystem, das ein Schnittstellensystem betätigt, das auf die zu rotierenden Hubkörper (1) konfiguriert ist. Das **dadurch gekennzeichnete** Bausystem umfasst:
i) ein oder mehrere Verankerungsmodule (2), die nicht rotieren und Druckbelastungen halten, wobei ein oder mehrere Verankerungsmodule (2) aufgeblasene Bauteile aufweisen: und
ii) Kabel (4), die die Hubkörper (1) miteinander verbinden mit dem einen oder mit mehreren Verankerungsmodulen (2) und nur axiale Zugbelastungen zwischen den Hubkörpern (1) übertragen bis zu einem oder mehreren Verankerungsmodulen (2).

2. Luftgestützte fliegende Plattform nach Anspruch 1, **dadurch gekennzeichnet, dass** die Schnittstellen den Hubkörper (1) rotiert durch einen der folgenden alternativen Ausführungsformen:
a) rotieren des Hubkörpers (1) als Ganzes, im Wesentlichen um seine Symmetrieachse durch Anwendung eines gesteuerten Drehmoments über einen Aktuator (23) an den Enden des Hubkörpers und im Wesentlichen um die Symmetrieachse mit einem Rollersatz, der auf einem Rad rollt (13);
b) rotieren des Hubkörpers (1) als Ganzes, im Wesentlichen um seine Symmetrieachse, durch Anlegen eines gesteuerten Drehmoments über einen Aktuator und ein Riemensystem (27) an dem Umfang des Hubkörpers (1), wobei die Anordnung realisiert werden kann an beliebiger Stelle entlang der Spannweite des Hubkörpers (1),
c) rotieren des Hubkörpers (1) als Ganzes, im Wesentlichen um seine Symmetrieachse durch Anlegen eines gesteuerten Drehmoments, über einen Aktuator und ein synchrones Antriebssystem mit zahnradartigen Zähnen an dem Umfang des Hubkörpers (1), mit dieser Anordnung an beliebiger Stelle entlang der Spannweite des Hubkörpers (1) ausgeführt,
d) rotieren des Hubkörpers (1) als Ganzes, im Wesentlichen um seine Symmetrieachse, durch Anlegen eines gesteuerten Drehmoments durch Betätigen eines Antriebssystems mit zwei Rädern (13) mit jeweils mindestens drei Sätzen von Laufrollen auf beiden Seiten(13), wobei alle Roller in jedem Rad (13) durch eine Struktur (22) starr verbunden sind und der Satz von Rollern in einer Scheibe miteinander verbunden ist mit Kabeln zu dem anderen Spiegelungssatz der Struktur (22) von starr verbundenen Laufrädern auf dem anderen Rad (13) in dem Hubkörper;
e) rotieren des Hubkörpers (1) als Ganzes, im Wesentlichen um die Symmetrieachse durch Anlegen eines gesteuerten Drehmoments an eine Felge (29) über einen Aktuator um die Rolle (30) in der Antriebshülse (24) zu rotieren,
f) wobei die Oberfläche des Hubkörpers (1) durch einen Satz von Matten gebildet wird, die sich in ähnlicher Weise wie Förderbänder bewegen und die Bedingungen für die Erzeugung des Auftriebs über den Magnus-Effekt erzeugen, während die Mehrheit der Hubkörperstruktur stationär bleibt.

3. Luftgestützte fliegende Plattform nach Anspruch 1, **dadurch gekennzeichnet, dass** eine Anzahl von Säulen von Hubkörpern (1) vorgesehen sind, die jeweils oben mit einem primären Verankerungsmodul (2) verbunden sind und:
a) jede Säule weist ein separates sekundäres Verankerungsmodul (3) auf und jedes sekundäre Verankerungsmodul (3) ist durch Strukturelemente (8) mit einem primären Verankerungsmodul (2) mittels eines flexiblen Strukturelements verbunden, wodurch jede Säule eine andere Referenzhöhe über dem primären Ankermodul haben kann, oder
b) zwei oder mehr Säulen sind mit einem gemeinsamen primären Ankermodul verbunden.

4. Luftgestützte fliegende Plattform nach Anspruch 1, **dadurch gekennzeichnet, dass** ein aufgeblasener Körper mit geteilten inneren Kammern, innen mit einem brennbaren Auftriebsgas aufgeblasene ist (31) und die äußersten Kammern (32) mit einem inerten Gas relative zum brennbaren Auftriebsgas aufgeblasen ist. Verbrennung des Auftrieb Gases in atmosphärischer Luft, bei dem die Materialien der äußersten Kammer (n) eine Diffusionsrate des Auftrieb Gases haben die größer ist als die Diffusionsrate des Auftrieb Gases des Materials, das die inneren von den äußeren Kammerabteilen (31) trennt.

5. Luftgestützte fliegende Plattform nach Anspruch 1, **gekennzeichnet durch** die Kombination von:
a) zwei Untersysteme zur Steuerung der Position des Massenzentrums und des Zentrums des Auftriebs der Luftgestützte fliegende Plattform **durch** bewegte Flüssigkeiten, die entweder Ballastflüssigkeiten oder Auftrieb Gase zwischen Reservoirs sein können;
b) ein Untersystem, das aus einer zusätzlichen Außenkammer (33) von aufgeblasenen Hüllen besteht, die immer den gleichen relativen Druck **durch** Gaspumpen und/oder Aktuator Gas Freigabe aufweisen die **durch** das Steuersystem betätigt werden.

6. Luftgestützte fliegende Plattform nach Anspruch 1, **dadurch gekennzeichnet, dass**
sie ein oder mehrere Haltekabel zum Verbinden der Plattformen mit der gleichen Menge von Boden Stationen aufweist. Jedes Haltekabel besteht aus einer Kombination von:
a) Strukturfasern;
b) Flüssigkeitsübertragungsschlauch;
c) Elektrische Leiter
i) Einschließlich in nur einem Teil des Kabels absteigend von der Plattform, ein Blitzableiter Kabel;
d) Glas fasern;
e) Signalisierungshülsen (19) mit zwei diametral gegenüberliegenden Öffnungen, die Laufrollen umfassen, die das Kabel berühren, und steuerbare Bremsen, die die Hülsen in fester Position im Kabel verriegeln, ein Energiespeichersystem für die elektrische Energieerzeugung, mit einer Kombination von
i. elektrischen Generatoren, die von Laufrollen betätigt werden;
ii. elektrische Induktionsgeräte.

7. Luftgestützte fliegende Plattform nach Anspruch 1, die koaxial zum Hubkörper (1) eine oder mehrere vertikale Windkraftanlagen aufweist, wobei jeder Flügel (40) an den Enden an einem Bauteil (39) befestigt ist.

8. Luftgestützte fliegende Plattform nach Anspruch 7, **dadurch gekennzeichnet, dass** die eine oder mehrere Vertikalachsen-Windenergieanlagen ein oder mehrere Seilkabel (14) umfassen und Drehmoment und Drehung an eine Nabe (21) liefern.

## Revendications

1. Plateforme aéroportée, dont la portance est accomplie par la combinaison de la flottabilité dans l'atmosphère et la force aérodynamique causée par l'effet Magnus, constitué par :
a. Un système aérodynamique comprenant les corps portant (1) configuré comme des corps tournants et disposé dans une matrice, les corps portant (1) mentionnés sont composés par des éléments gonflables ;
b. Un système structurel ; et
c. Un système de contrôle qui actionne le système d'interface configuré pour faire tourner les corps portant (1) ; dans ce contexte le système structurel comprenne :
i. Un ou plusieurs modules d'ancrage (2) qui ne tournent pas et tiennent des charges compressives, un ou plusieurs modules d'ancrage mentionnés (2) comprenant des composants gonflables ; et
ii. Câbles (4) qui relient les corps portant (1) l'un à l'autre et à un ou plusieurs modules d'ancrage (2), et transfèrent seulement des charges axiales de traction entre les corps portant (1) jusqu'à un ou plusieurs modules d'ancrage (2).

2. Plateforme aéroportée selon la revendication 1, **caractérisée en ce que** le système d'interface fait tourner la surface d'un corps portant (1) par l'un des modes alternatifs suivants :
a. Faire tourner le corps portant (1) dans son ensemble, particulièrement autour de son axe de symétrie, en appliquant un moment d'une force contrôlé, par l'intermédiaire d'un actionneur (23), aux extrémités du corps portant mentionné et substantiellement aux axes de symétrie nommé, avec un ensemble de roues roulant sur une roue primaire (13) ;
b. Faire tourner le corps portant (1) dans son ensemble, particulièrement autour de son axe de symétrie, en appliquant un moment d'une force contrôlé, par moyen d'un actionneur et d'un système de courroie (27), à la périphérie dudit corps portant (1), cette disposition peut être placer arbitrairement sur le long du corps portant (1) mentionné ;
c. Faire tourner le corps portant (1) dans son ensemble, particulièrement autour de son axe de symétrie, en appliquant un moment d'une force contrôlé, par moyen d'un actionneur et une transmission synchrone constituée par des dents de type engrenage, à la périphérie dudit corps portant (1), cette disposition peut être placer arbitrairement sur le long du corps portant (1) mentionné ;
d. Faire tourner le corps portant (1) dans son ensemble, particulièrement autour de son axe de symétrie, en appliquant un moment d'une force contrôlé, par moyen d'un système de transmission constitué par deux roues (13), chacune avec au moins trois ensembles de roues autour, sur la périphérie et extérieur (proche du dessus de la forme du cylindre) de la surface de la roue (13), tous les roues en chaque roue primaire sont unis rigidement par une structure (22) et l'ensemble des roues de la roue primaire est connecté par des câbles à l'autre groupe de rouleaux en miroir (22) rigidement connecter à la roue (13) du corps portant ;
e. Faire tourner le corps portant (1) dans son ensemble, particulièrement autour de son axe de symétrie, en appliquant un moment d'une force contrôlé à une jante (29) par moyen de faire rouler les rouleaux (30) dans le composant avec des roues motrices (24) ;
f. Avoir la surface du corps portant (1) composé par un ensemble de tapis qui se déplacent similairement aux bandes transporteuses et créent des conditions pour la génération de la portance par moyen de l'effet Magnus, tandis que la majorité de la structure du corps portant reste stationnaire.

3. Plateforme aéroportée selon la revendication 1, **caractérisée en ce qu'**il existe des ensembles de colonnes de corps portant dans lesquels chaque colonne est au-dessus et reliée à un module d'ancrage primaire (2), et :
a. Chaque colonne a un deuxième module d'ancrage (3) séparé et chaque module d'ancrage secondaire (3) est connecté par un élément structurel (8) au module d'ancrage primaire (2), par moyen d'un élément structurel flexible, entraînant éventuellement chaque colonne d'avoir une hauteur de référence différente au-dessus du module d'ancrage primaire ou
b. Deux ou plusieurs colonnes sont connectées au module d'ancrage primaire commun.

4. Plateforme aéroportée selon la revendication 1, **caractérisée en ce que** le corps gonflable est divisé intérieurement en compartiments, ou le compartiment(s) intérieur (31) est gonflé avec un gaz flottant combustible et le(s) compartiment(s) extérieur(s) (32) est(sont) gonflé(s) avec un gaz inerte à la combustion dudit gaz flottant dans l'air atmosphérique, et dans lequel les matières du(des) compartiment(s) mentionné ont un taux de diffusion du gaz flottant à travers de ceux-ci, plus grand que le taux de diffusion du gaz flottant à travers la matière qui limite les compartiments intérieurs (31).

5. Plateforme aéroportée selon la revendication 1, **caractérisée par** une combinaison de :
a. Deux sous-systèmes pour contrôler la position de, respectivement, le centre de masse et le centre de la flottabilité de la plateforme aéroportée en déplaçant des fluides, qui peuvent être un fluide à lester ou un gaz flottable entre les réservoirs ;
b. Un sous-système constitué pas un extra compartiment extérieur (33) en enveloppes gonflées, qui ont toujours la même pression relative par le pompage de gaz et la sortie actionnés par le système de commande.

6. Plateforme aéroportée selon la revendication 1, **caractérisée en ce qu'**elle comprend un ou plusieurs câbles pour connecter la plateforme au même numéro de stations terrestre, chaque câble d'attachement comprenant une combinaison de :
a. Fibres structurelles ;
b. Tube de transfert de fluide ;
c. Conducteurs électriques ;
i. Y compris dans une seule partie de la longueur descendant de la plateforme un paratonnerre ;
d. Fibres optiques ;
e. Sphères de signalisation pour la sécurité aéronautique (19) avec deux orifices diamétralement opposés qui comprennent des rouleaux qui touchent le câble et freins contrôlables qui les verrouillent à des positions fixes dans le câble, un système de stockage d'énergie, lumières de signalisation, un sous-système pour production d'énergie électrique composé par :
i. Générateurs électriques actionnés par des roues ;
ii. Dispositifs d'induction électrique.

7. Plateforme aéroportée selon la revendication 1 comprenant, coaxialement avec un corps portant (1), une ou plusieurs turbines à vent à axe vertical, avec chaque pale (40) fixée à ses extrémités à un élément structurel (39).

8. Plateforme aéroportée selon la revendication 7 **caractérisée en ce qu'**une ou plusieurs turbines à vent à axe vertical comprennent un ou plusieurs câbles d'attache (14) et fournisse un moment d'une force et une rotation à un composant (21).
